Europäisches Patentamt

European Patent Office

Office européen des brevets

(11) Numéro de publication: **0 057 335**
**A1**

## DEMANDE DE BREVET EUROPEEN

(21) Numéro de dépôt: **81401693.7**

(22) Date de dépôt: **26.10.81**

(51) Int. Cl.³: **G 10 H 1/00,** G 09 B 15/04

(30) Priorité: **22.01.81 FR 8101119**

(43) Date de publication de la demande: **11.08.82**
**Bulletin 82/32**

(84) Etats contractants désignés: **BE CH DE GB IT LI NL**

(71) Demandeur: **Esparseil, Claude, 20, boulevard de la**
**République, F-92210 Saint-Cloud (FR)**

(72) Inventeur: **Esparseil, Claude, 20, boulevard de la**
**République, F-92210 Saint-Cloud (FR)**

(74) Mandataire: **Peuscet, Jacques, 3, Square de Maubeuge,**
**F-75009 Paris (FR)**

(54) **Instrument musical électronique pour jouer par contact direct du doigt sur une partition musicale.**

(57) L'instrument musical électronique selon l'invention est notamment utilisable dans le domaine du jouet et le domaine de l'enseignement musical. Il comporte un moyen de lecture (5) et une partition musicale (6) amovible et superposable au moyen de lecture (5) précité. Il est caractérisé par le fait que les deux plots de chaque contact du moyen de lecture (5) sont superposés et qu'ils sont tous les deux situés sous la partition musicale (6). La partition musicale (6) comporte à l'endroit des contacts, des signes significatifs de la durée d'une note et permet en positionnant un doigt sur l'un des signes précités et en exerçant une pression du doigt sur ledit signe, de produire une note.

1

# INSTRUMENT MUSICAL ELECTRONIQUE POUR JOUER PAR CONTACT DIRECT DU DOIGT SUR UNE PARTITION MUSICALE

L'invention concerne un instrument musical électronique pour jouer par contact direct du doigt sur une partition musicale, utilisable notamment dans le domaine du jouet et dans le domaine de l'enseignement musical.

Dans un premier mode de réalisation, tel que celui décrit dans le brevet français numéro 2 386 095, le son est obtenu en plaçant un stylet conducteur sur l'un ou l'autre des plots électriques localisés sur une droite perpendiculaire à la portée musicale et aux emplacements mêmes des notes sur cette portée ; les demi-tons intermédiaires sont obtenus au moyen d'un contacteur pour tous les dièses et d'un autre contacteur pour tous les bémols.

Un tel dispositif est d'un emploi malaisé et restreint : en effet, le stylet conducteur est relié à un fil encombrant et inesthétique ; la production des demi-tons implique une manoeuvre particulière ; pour pouvoir jouer un air musical, il faut lire une partition sans être assuré de pouvoir respecter le tempo requis, compte tenu de la précision nécessaire pour la réalisation du contact du stylet conducteur sur l'un ou l'autre des plots électriques.

Dans un second mode de réalisation, tel que celui décrit dans le brevet français numéro 1 564 745, le son est obtenu par le contact d'un stylet conducteur sur des plots de forme allongée correspondant à la succession des lignes et intervalles de la portée ; la partition musicale placée sur les plots allongés est perforée à l'emplacement des notes.

Dans un tel dispositif, la production des demi-tons intermédiaires n'est prévu qu'à titre éventuel ; en outre, en jouant un air musical on ne peut être assuré de pouvoir respecter le tempo, compte tenu de la précision requise pour placer le stylet conducteur dans les trous à l'emplacement des notes.

La présente invention a pour but de remédier aux inconvénients précités et à cet effet elle se propose de décrire un instrument musical électronique pour jouer par contact direct du doigt sur une partition musicale.

La présente invention a donc pour objet un instrument

2

musical électronique comportant un moyen de lecture pourvu de contacts comportant chacun au moins un plot filiforme situé sous une partition musicale, ladite partition étant amovible et superposable à l'ensemble des plots filiformes précités, des moyens électroniques de synthèse et d'amplification de sons, au moins un haut-parleur et une alimentation électrique, caractérisé par le fait que les deux plots de chaque contact sont superposés et qu'ils sont tous les deux situés sous la partition musicale.

La partition musicale se présente avantageusement sous la forme d'un élément plan non perforé.

Selon une particularité de l'invention, la partition musicale comporte à l'endroit des contacts, des signes significatifs de la durée d'une note et permet en positionnant un doigt sur l'un des signes précités et en exerçant une pression du doigt sur ledit signe, de produire une note.

Par signe, on entend un symbole significatif de la durée d'émission d'un son. Une série de signes peut être constituée par la série des signes de musique, une série de personnages, une série d'animaux, une série d'objets, une série de chiffres ou une série de signes nés de la création artistique.

L'emplacement de chacun des signes de la partition musicale correspond avantageusement à une note prédéterminée dont la durée est égale à la durée de la pression exercée par le doigt sur le signe.

Selon une autre particularité de l'invention, la partition musicale comporte un moyen que peut suivre le doigt pour jouer plusieurs notes successives dans le bon ordre.

Le moyen précité peut être constitué par un trait qui relie deux signes consécutifs.

Le dispositif selon l'invention permet ainsi de jouer l'air de la partition en faisant glisser le doigt d'un signe à l'autre, sans erreur.

Selon une réalisation avantageuse du moyen de lecture de l'instrument selon l'invention, les plots filiformes sont parallèles et équidistants d'un écartement simple entre tous les demi-tons, sauf entre les notes MI-FA et SI-DO où l'écartement est double.

Le dispositif selon l'invention permet ainsi de faire

3

figurer, si on le souhaite, la portée de la partition tout en respectant sa géométrie classique constituée par un espacement égal entre chaque ligne de la portée.

L'instrument selon l'invention comporte avantageusement un moyen de fixation et de centrage de la partition musicale sur le moyen de lecture.

Un tel moyen de fixation est, de préférence, constitué par un carter comportant un fond et un bord périphérique de hauteur suffisante pour pouvoir contenir plusieurs partitions musicales.

L'instrument musical selon l'invention permet ainsi, non seulement de fixer et de centrer une partition sur le moyen de lecture pour exécuter un air mais également de recevoir toutes les partitions lorsque l'instrument n'est pas en service.

Pour mieux faire comprendre l'objet de la présente invention, on va décrire ci-après un mode de réalisation représenté sur le dessin annexé.

Sur ce dessin :

- la figure 1 est un schéma synoptique de l'instrument selon l'invention,

- la figure 2 est une vue de dessus, schématique de l'instrument de l'invention,

- la figure 3 est une vue de dessus d'un mode de réalisation d'une partition,

- la figure 4 est une coupe, perpendiculaire aux plots, du moyen de lecture équipant l'instrument selon l'invention, et

- la figure 5 est une vue montrant la géométrie des plots du moyen de lecture.

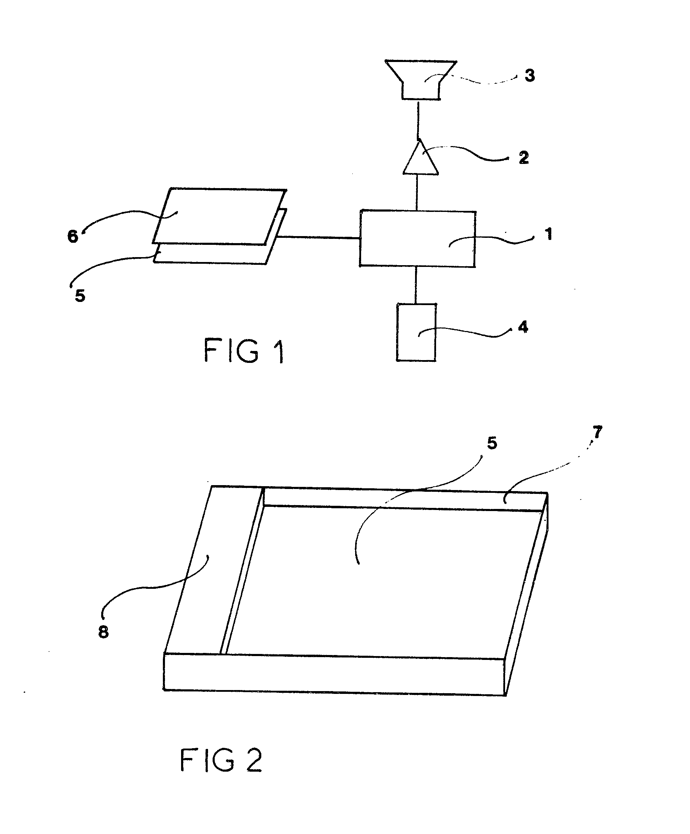

Tel qu'il est représenté sur la figure 1, l'instrument selon l'invention comprend un synthétiseur de notes 1, sur une ou plusieurs octaves, y compris les notes altérées (dièses et bémols), un amplificateur 2, un haut-parleur 3, une alimentation électrique 4, et un moyen de lecture 5 sur lequel se pose la partition musicale 6.

Le synthétiseur de notes 1 peut être soit un générateur de fréquences associé à des résistances ou à un dépôt résistif, soit un microprocesseur. La puissance de l'amplificateur

4

2 est liée à la puissance du haut-parleur 3. L'alimentation électrique 44 peut être par pile ou par secteur avec transformateur.

Ainsi qu'il est visible sur la figure 2, l'instrument selon l'invention comporte un carter réalisé en une matière non conductrice telle qu'une matière plastique. Le carter comprend un fond plat et un rebord périphérique 7.

Le moyen de lecture 5 est fixé sur ce fond plat d'une manière permanente, par exemple à l'aide d'une colle appropriée. La hauteur du rebord est fonction du nombre de partitions que l'on souhaite y placer lorsque l'instrument n'est pas en service. La forme du fond plat est la même que la forme de la partition 6. Si la partition est rectangulaire, le fond plat est rectangulaire.

Sous le fond plat du carter ou sur le côté 8 de celui-ci, peuvent être logés les éléments 1, 2, 3 et 4 de l'instrument selon l'invention.

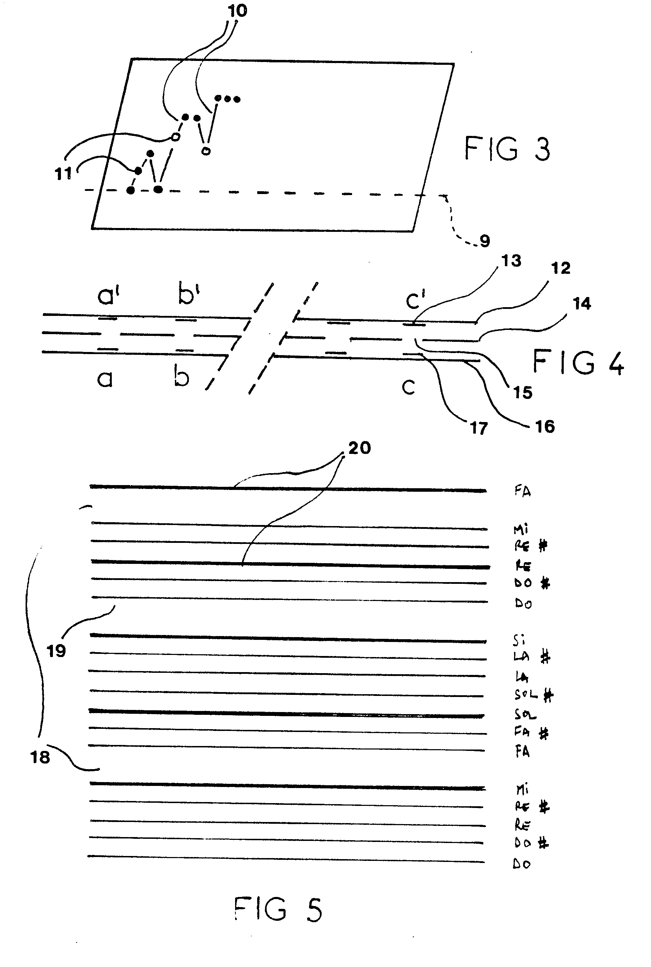

Telle qu'elle est représentée sur la figure 3, la partition 6 est constituée d'une feuille souple en papier ou autre, sur laquelle sont portés par impression les signes 11 représentatifs de la durée d'une note.

Tous les sons ayant la même fréquence hertzienne caractéristique d'une note sont alignés à l'emplacement même d'un des contacts du moyen de lecture qui assure la fermeture du circuit correspondant à cette fréquence hertzienne. Si, par exemple, le premier contact du moyen de lecture correspond au DO 3, tous les signes figurant sur une ligne imaginaire 9 située au même emplacement sur la partition devront correspondre au DO 3.

Les signes sont reliés par des traits 10 qui peuvent être formés par une ligne continue, discontinue, des pointillés ou par un trait mixte.

Tel qu'il est représenté en coupe, sur la figure 4, le moyen de lecture 5, en forme d'élément plan, se compose d'un premier substrat isolant 12 comportant des dépôts conducteurs 13, d'un second substrat isolant 14 comportant des ouvertures 15 au niveau des dépôts conducteurs et d'un troisième substrat isolant 16 comportant des dépôts conducteurs 17. A chacun des couples de plots a'a, b'b, c'c, etc... correspond un

5

circuit dont la fermeture assure l'émission d'une note déterminée.

Tels qu'ils sont représentés sur la figure 5, les plots filiformes du moyen de lecture sont placés de telle façon qu'il existe un écartement simple entre tous les demi-tons sauf entre les notes MI-FA 18 et SI-DO 19 où l'écartement est double. Tous les traits pleins 20 représentatifs d'une ligne de la portée musicale sont équidistants.

En disposant, selon cette géométrie, les plots filiformes, on peut faire figurer une portée sur la partition musicale et rendre ainsi possible la reconnaissance d'une note grâce à sa position sur la portée.

Pour utiliser l'instrument musical électronique selon l'invention, on prend une partition musicale 6 que l'on pose sur le fond plat du carter muni du moyen de lecture 5. On positionne le doigt sur le premier signe de la partition musicale 6 et on exerce une pression du doigt sur le signe, pendant la durée voulue ; puis le doigt étant guidé par le trait 10, on passe au signe suivant, sans avoir besoin de quitter le doigt de la surface de la partition, en le faisant glisser sur la surface de la partition et on recommence l'opération.

L'instrument musical électronique qui vient d'être décrit a une application particulièrement intéressante dans le domaine du jouet junior et senior et le domaine de l'enseignement musical.

Il est bien entendu que le mode de réalisation, ci-dessus décrit, n'est aucunement limitatif et pourra donner lieu à toutes modifications désirables sans sortir pour cela du cadre de l'invention.

0057335

6
<u>REVENDICATIONS</u>

1 - Instrument musical électronique comportant un moyen de lecture pourvu de contacts comportant chacun au moins un plot filiforme situé sous la partition musicale, ladite partition étant amovible et superposable à l'ensemble des plots filiformes précités, des moyens électroniques de synthèse et d'amplification de sons, au moins un haut-parleur et une alimentation électrique, caractérisé par le fait que les deux plots (13, 17) de chaque contact sont superposés et qu'ils sont tous les deux situés sous la partition musicale (6).

2 - Instrument selon la revendication 1, caractérisé par le fait que la partition musicale (6) se présente sous la forme d'un élément plan non perforé.

3 - Instrument selon l'une des revendications 1 ou 2, caractérisé par le fait que la partition musicale (6) comporte à l'endroit des contacts, des signes (11) significatifs de la durée d'une note et permet en positionnant un doigt sur l'un des signes (11) précités et en exerçant une pression du doigt sur ledit signe, de produire une note.

4 - Instrument selon la revendication 3, caractérisé par le fait que l'emplacement de chacun des signes (11) sur la partition musicale (6) correspond à une note prédéterminée dont la durée est égale à la durée de la pression exercée par le doigt sur le signe (11).

5 - Instrument selon l'une des revendications 1 ou 2 caractérisé par le fait que la partition musicale (6) comporte un moyen que peut suivre le doigt pour jouer plusieurs notes successives dans le bon ordre.

6 - Instrument selon la revendication 5, caractérisé par le fait que le moyen que peut suivre le doigt pour jouer plusieurs notes dans le bon ordre est constitué par un trait (10) qui relie deux signes (11) consécutifs.

7 - Instrument selon l'une des revendications 1 à 6, caractérisé par le fait que les plots filiformes sont parallèles et équidistants d'un écartement simple entre tous les demi-tons sauf entre les notes MI-FA et SI-DO où l'écartement est double.

8 - Instrument selon l'une des revendications 1 à 7,

7

caractérisé par le fait qu'il comporte un moyen de fixation et de centrage de la partition musicale sur le moyen de lecture (5).

9 - Instrument selon la revendication 8, caractérisé par le fait que le moyen de fixation et de centrage est constitué par un carter.

10 - Instrument selon les revendications 1 à 9, caractérisé par le fait qu'il est utilisable à titre de jouet.

0057335

1/2

FIG 1

FIG 2

10

11

9

FIG 3

13  12

14

a'   b'           c'

a    b            c

15

17   16

FIG 4

20

FA

Mi
RE #
RE
DO #
DO

Si
LA #
LA
SOL #
SOL
FA #
FA

19

Mi
RE #
RE
DO #
DO

18

FIG 5

Office européen
des brevets

**RAPPORT DE RECHERCHE EUROPEENNE**

Numéro de la demande

EP 81 40 1693

| | DOCUMENTS CONSIDERES COMME PERTINENTS | | | CLASSEMENT DE LA DEMANDE (Int. Cl. 3) |
|---|---|---|---|---|
| Catégorie | Citation du document avec indication, en cas de besoin, des parties pertinentes | Revendica-tion concernée | | G 10 H   1/00<br>G 09 B 15/04 |
| X | <u>US - A - 3 562 394</u> (P.E. KIEPE)<br>* Colonne 3, lignes 27-75; colonne 4, lignes 1-31; figure 1 * | 1-4,8,10 | | |
| X | <u>FR - A - 1 301 181</u> (R. VIAU)<br>* Page 1, colonne de gauche; figures 2,3 * | 1-4 | | |
| X | <u>FR - A - 2 032 349</u> (MARVIN GLASS & <u>ASSOCIATES</u>)<br>* Page 2, lignes 2-11, lignes 30-39; figure 1 * | 5-7,10 | | DOMAINES TECHNIQUES RECHERCHES (Int. Cl. 3)<br><br>G 10 H<br>G 09 B<br>A 63 H |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | | |
|---|---|---|---|
| **Lieu de la recherche**<br>La Haye | **Date d'achèvement de la recherche**<br>22-04-1982 | **Examinateur**<br>PULLUARD | |

OEB Form 1503.1  06.78